# EUROPEAN PATENT APPLICATION

(11) **EP 0 556 701 A2**
(43) Date of publication of application: **25.08.1993**
(21) Application number: 93102054.9
(22) Date of filing: 10.02.1993
(51) Int. Cl.: H04N 7/08

(54) **Improved teletext transmission receiver with simplified selection**

(30) Priority: 17.02.1992 IT RM920101
(71) Applicant: EDICO S.r.l., I-00197 Roma (IT)
(72) Inventor: d'Errico, Federico, I-00186 Roma (IT)

(57) **Abstract**

The present invention relates to a receiver of teletext transmissions, under form of a plurality of numbered pages, inserted in the television signal, comprising means (11,12) for receiving and demodulating the television signal, also decoding means (13) for also obtaining the associated teletext signal and selection (16-20) means for selecting a chosen page from those transmitted, and memory means (14) for memorising at least one chosen teletext page, the main characteristic of the invention consits in that the receiver includes additional means that allow for selecting from the contents of a determined page numbers of one or more other pages and memorise them, for facilitating the selection and/or the memorisation.

## Description

The present invention refers to a receiver of teletext transmissions, under the form of a plurality of pages, inserted in the television signal, comprising means for receiving and demodulating the television signal, and also decoding means for obtaining the associated teletext signal and selection means for selecting a chosen page from those transmitted, and memory means for memorising at least one chosen teletext page.

Receivers of teletext transmissions having the abovementioned characteristics are known.

As is known the major drawbacks for a user of the teletext service (known in Italy as Televideo) are the complexity of the page selection mechanism and the waiting time, i.e. the time necessary for obtaining the visualisation of the requested pages.

For reducing such drawbacks two systems have been elaborated, FLOF also called FASTEXT, and TOP. Both systems provide the transmission of additional hidden information to the user but utilised automatically by the decoder: such information in the case of the FLOF system is inserted in the "ghost rows", i.e. in lines not shown of the teletext pages, while in the TOP system it is concentrated in the teletext pages, called "TOP tables". Therefore the manager of the teletext service that would like to adopt one of the two systems must modify the generation plant and transmission software. Some countries have chosen FLOF, others TOP, but many others have not yet adopted either of the two systems, thus avoiding the aforementioned modifications to the plants, pushed to this decision by the fact that, at a European level, no agreement as to a single system has been reached
Great interest is therefore given to the possibility of obtaining, in a television receiver, at least part of the TOP and/or FLOF functions, without modifying in any way the transmitted signal, but acting only upon the software of the teletext decoder.

The aim of the present invention is therefore that of indicating a receiver of teletext transmissions being more flexible than those known, able to avoid or minimise the mentioned drawbacks, in relation to the consultation of pages, also in the case of normal teletext transmission.

For achieving such aims the present invention has as its subject a receiver of teletext transmissions, under form of a plurality of pages, inserted in the television signal, comprising means for receiving and demodulating the television signal, and also decoding means for obtaining the associated teletext signal and selection means for selecting a chosen page from those transmitted, and memory means for memorising at least one chosen teletext page, characterised in that the receiver includes additional means that allow for selecting from the contents of a page numbers of one or more other pages and memorise them, for facilitating the selection and/or the memorisation thereof.

Further aims and advantages of the present invention result in being clear from the following detailed description and annexed drawing, supplied as a purely explanatory and non-limiting example, wherein:

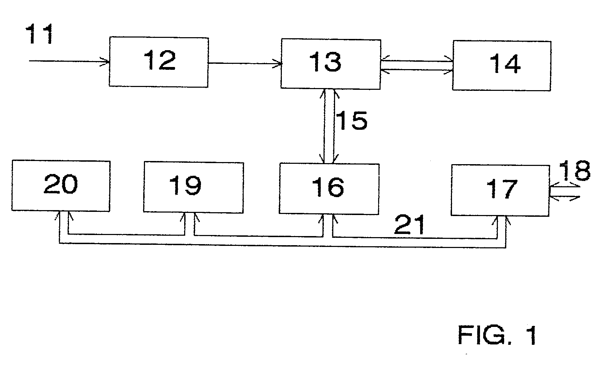

figure 1 schematically represents part of the electric circuit of a receiver of teletext transmissions.

In order that the present invention reveal in an optimal manner its effects, It is opportune to have use of a teletext decoder hardware with appropriate characteristics: it is above all convenient to use a chip that is able to automatically search eight teletext pages, rather than four; it is furthermore opportune that the decoder is equipped with a memory of at least 32, but preferably 64 pages, that can be directly loaded by the acquisition chip by way of direct connection (DMA) and not through serial gates (I2C bus). An appropriate chip is the SAA 9042 recently put on the market by the company Philips.

The block diagram of an appropriate hardware is shown in figure 1, where reference number 11 indicates the video signal, coming from the video detector of the television receiver; reference number 12 indicates a teletext data extractor circuit; reference number 13 indicates a teletext decoder, for example realised utilising the cited chip by the company Philips; the decoder includes more receiving acquisitors being completely separate and independent so as that, as already mentioned, it is possible receive up to eight pages.

Reference number 14 indicates a high capacity teletext page memory; reference number 15 indicates the known I2C bus that links the decoder 13 to block 16, that represents a microprocessor or microcontroller that carries out the management of the teletext reception; reference number 17 indicates an interface for the television's remote control and reference number 18 the connection bus with such remote control.

Reference number 19 indicates a fixed memory (for example of the EPROM type) and reference number 20 a read and write memory (RAM), possibly being of the non volatile type.

Reference number 21 finally indicates the bus that links the microprocessor 16 with the interface 17 and memories 19 and 20.

The functioning of the circuit of Figure 1 is the following: the microprocessor 16 carries out the management control, thanks to an appropriate software, contained in the EPROM 19; the RAM memory 20 is the work memory of the microprocessor, while the teletext pages are memorised in the memory 14.

A part of the data can also be memorised in an internal RAM of the microprocessor 16.

The invention is based on the acknowledgement of the fact that at least a part of the auxiliary information that is transmitted in TOP in appropriate tables (in particular the Basic TOP Table and the Additional Information Table) is visibly present in the teletext pages containing the indexes and sub-indexes. Similarly, on the bottom of many teletext pages, due to explicit editorial decisions, notices of other pages are found that the user presumably can request after having read the contents of the current page: such requests can replace the so-called "link" that in FLOF are transmitted in the "ghost row" 27. Such links are nothing less than page addresses that the user could request, after the current page, and that the decoder utilises, unknown to the user, for acquiring beforehand the aforementioned pages.

Utilising the visibly transmitted information, i.e. in the visible part of the normal teletext pages, and not in special pages or lines invisible to the user, it is possible fulfil a part of the functions provided by the TOP and FLOF systems.

So as to explain how this can take place, it is convenient to cite an example, based on the current structure of Televideo RAI (dated 21.5.1991). When the user, upon use of the remote control, switches from TV to teletext, the teletext decoder automatically seeks the general index (page 100). The user, consulting the index, requests another page, that is usually a sub-index (for example page 400, that it is the sub-index relative to "the weather, transport, traffic"). For doing this, the user is obliged to digit the page number of interest, this being an operation that the FLOF and TOP systems try to make no longer necessary for the user, replacing it with a more simple operation, consisting in depressing a single coloured key, chosen from the four available on the remote control.

In the absence of the TOP and FLOF systems a software can be inserted in the decoder that explores the page shown and automatically identifies all sequences of three decimal digits (not more or less) constituting a number from 000 to 899. To such three digit numbers the meaning of "page address" is given; obviously this hypothesis is almost always (but not always) shown to be correct; in case of errors (e.g. the number had a different meaning) as will be seen, has no serious consequences for the user.

As is already the case in decoders provided in several video recorders, a cursor can be provided that the user moves on the screen using appropriate keys on the remote control, in order to indicate the desired page number to be acquired.

This operation is certainly easier than digiting a three digit number.

In practice, in place of the four coloured keys of the FLOF or TOP systems, the remote control could be supplied, according to the present invention, with two keys characterised with an arrow directed upwards or downwards or by a similar symbol: the first key moves the cursor to the next three digit number that presumibly indicates a teletext page, the second to a previous number. Whenever the three digit number has a different meanning, the user understands from its context and avoids pausing on it. When the user, with the mentioned procedure, has selected the number of the first page that he wishes to view, a confirmation command may be given by using a third special key (once again one of the four coloured keys of the FLOF or TOP systems), instructing the decoder to search and display the page.

A procedure of this type may be applied both on the index pages, and on the normal pages, in this case the cursor will automatically search the page numbers shown in the "notices", that the editor usually inserts in the line or in lines at the bottom of the page.

A second aspect of the invention consists in that the decoder, as soon as a page has been acquired, immediately provides for acquiring and memorising all the pages, identified with the three digit number search method previously described, the numbers of which are contained in the current page, so as that, when the user requests one of the aforementioned pages, it is already in the acquisition phase or, is even already to be found in the memory.

Thus, when the user requests a page, the decoder must immediately verify whether it is already in the memory. With this aim it is necessary that the work memory RAM 20 of the microprocessor 16 (note the figure), contains a table, continually updated, that describes the contents of the "multipage" memory 14 of the decoder (i.e. indicates which pages, identified by their number and by the subcode, are contained in the same memory and in which location). If the page requested by the user is already in the memory, it is immediatly displayed, otherwise the microprocessor verifies whether the actual page is object of a search (i.e. whether its address has been communicated to one of the acquisitors). Even in cases where this eventuality is not verified, the microprocessor arranges for the immediate acquisition of the page in question.

The invention provides that as the pages are successively acquired, be it automatically or upon request of the user, they are progressively accumulated in the multipage memory. It is clear that at a certain point the memory, that as already mentioned, typically contains 32 or 64 pages, will fill, consequently the newly acquired pages must over write some of the older pages. The complete emptying of the memory takes place the moment in which the user changes channel.

Another aspect of the invention regards the method for selecting the pages to over write. One assumes that the pages containing the indexes or sub-indexes are more convenient to store; the user will in fact periodically return to these pages for addressing his new searches. In absence of the Basic TOP Table, that allows for identifying such pages, it may be supposed that the pages, in which the search method of the three digit numbers allows to identify at least five numbers (or other established value), are indexes. Such pages will be marked with a flag, and will only be over written when the memory no longer contains pages without flags.

The proposed criteria can, obviously, in some cases, make mistakes. This however does not cause grave consequences, in that, if an index page is not recognised as such, the only consequence is that it has more probabilities of disappearing from the memory, consequently the user, when requesting it, will have to wait longer; on the contrary if a generic page is recognised as an index, it will receive a privileged treatment by mistake and will remain longer in the memory, even if the probability of the user requesting it are minor, if compared to the real index pages. For carrying out the described invention it is necessary to realise a rather complex management mechanism of the multipage memory, that will now be illustrated making reference to the previously cited example of the user consulting Televideo RAI.

For simplicity it is supposed that the multipage memory 14 has a capacity of only 16 pages, even if, as mentioned, for a better realisation of the invention is opportune that the memory capacity is of at least 32 pages. Furthermore it is assumed that the previously cited chip SAA 9042 by Philips is utilised, that provides for eight acquisitors of the teletext pages. It is opportune that the eight acquisitors are utilised as follows: The acquisitor 1 for the acquisition of the page selected by the user (current page), the remaining acquisitors for the page acquisition according to the typical methods of the invention.

On the moment of commutation from TV to teletext, or better, on the moment of selecting a TV channel, the first acquisitor automatically searches page 100 (general index).

Once page 100 has been acquired, the numbers search method locates in the text the following eleven page numbers: 101, 103, 200, 300, 350, 400, 500, 600, 700, 750, 799. The seven vacant acquisitors are immediately destined to the acquisition of the first seven pages from those listed (101-500); as the aforementioned pages are gradually acquired, they are memorised, and the search is carried out for the remaining pages (600-799) always utilising all the available acquisitors, with exception of acquisitor 1, destined to the continuous updating of the page displayed (in this case page 100). If in the meantime the user has not selected another page, upon termination of the process the following pages are to be found in the multipage memory, starting from location 1 and up to location 12: 100, 101, 103, 200, 300, 350, 400, 500, 600, 700, 750, 799. Page 100 is continually updated by acquisitor 1 (in that it is the one displayed) while the other pages are updated in rotation inasmuch they are 11 as opposed to 7 available acquisitors.

The described process is accomplished only if the user remains inactive; usually however the user, after having consulted page 100 for several seconds, requests another page, that causes the interruption of the process. As an example we may assume the user requests page 103, in a moment in which it had already been acquired, together with pages 100, 101 and 200, respectively present in locations 1, 2 and 4 of the multipage memory 14. At this point the location of memory 3, containing page 103, is connected to visualisation circuits, and the exploration of page 103 is carried out for locating the new search addresses. Let us assume that such addresses (continuing with the example referring to the actual case of Televideo RAI of 21.5.1991) are: 101, 129, 150, 105, 106, 107, 108, 109, 111, 112, 104, 128, 190 and 330.

While the acquisitor 1 is destined, as usual, to the updating of the page displayed (in this case page 103) the remaining seven acquisitors are utilised for acquiring the first seven pages cited on 103 i.e. the pages 101, 129, 150, 105, 106, 107, 108.

We may suppose that the user waits some time before selecting other pages; in this case the acquisition of the requested pages will be completed, and that of the cited remaining pages in the text of 103 will be successively activated, according to the following scheme:
acquisitor 1: continuous updating of 103;
acquisitors 2 to 8: respectively search pages 109, 111, 112, 104, 128, 190 and 330.

Upon completing the operations, that, as mentioned, are assumed to be uninterrupted by the user, in the locations of the multipage memory the following pages will be found (in order of location 1 upward: 100, 101, 103, 200, 129, 150, 105, 106, 107, 108, 109, 111, 112, 104, 128, 190).

Page 330 is unable to find space in the memory, that we have assumed contains only 16 pages; at this point the previously described mechanism takes effect, according to which page 330 over writes the first page contained in the memory not being an index, i.e. that containing less then five references to other pages. Unfortunately this page results in being 101, that however, due to its particular contents (latest news) has a high probability of being requested. It is obvious that drawbacks of this nature cannot be solved by a simple automatic system.

It is to be noted that the analysis of the page contents, for locating the references to other pages, must certainly be made on the pages selected by the user; however, for reasons of the CPU work load, this may not automatically be carried out on all the acquired pages. In this case there would be some pages in which the flag would not indicate an index nor a non-index, but an "undetermined" value. The undetermined pages, in the classification of the "resistence to over writing", should occupy an intermediate place between the index pages and the normal pages.

It is supposed that the user now requests page 108. Such page is found in location 10 of the multipagine memory, that is thus connected to the visualization circuit. Simultaneously, address 108 is communicated to the acquisitor 1, in that such page must now be subject to the continuous updating process.

The addresses 101, 103 and 104, located in the text of the 108 by the numbers search method are communicated, respectively, to acquisitors 2, 3 and 4
As four acquisitors remain free, the cyclic refreshment process of the memory is activated, that is to say the addresses of the pages contained in the first memory location are communicated to said acquisitors, and i.e. pages 100, 330, 200 and 129 (page 103 is searched by acquisitor 3). If the user continues to remain inactive, the acquisitors from 2 to 8 are then utilized for refreshing the successive pages contained in the memory.

In conclusion:
- When the user selects a page, first of all it is verified whether the page is present in the memory: if so, the relative memory location is connected to visualization circuits; the address of the selected page is communicated to the acquisitor 1 and thus the continuous updating process of the said page is initiated.
   If the page is not present in the memory, it is searched by the acquisitor 1 and, once found, is memorized in the first free memory location.
- when the page selected by user is displayed, the search is activated, by way of acquisitors 2 to 8, of the pages whose numbers are mentioned in the text of the displayed page.
- all the searched pages by acquisitors 2 to 8 do not under go the continuous updating process; when an acquisitor has exhausted its task, i.e. has found the searched page, it is destined to the search of another page.
- if, on the grounds of the described method, several acquisitors remain inactive (in that in a given instant, there are less then 7 pages to be searched) said acquisitors are destined to a background work, consisting in the rotational updating of all the pages contained in the memory.
- the pages for which the search is not a consequence of a direct request by the user, but is determined by the method according to the invention, is defined as time-out: in other words if after a minute (or other established pause) the page is not found, it is considered inexistent and its search is abandoned.
- When the memory is full, the new pages over write the old. During overwriting the pages not identified as indexes are sacrificed first (i.e. those in which less then five page numbers have been identified in the text).

In order to classify all the pages it would be necessary to apply the three digit number search method also to the pages not shown; this could be impossible, due to reasons of over working the CPU of the microprocessor; in this case the flag that identifies the nature of the pages should be able to assume three values, and i.e. "page index", "undetermined page" and "non index page".

When necessary the pages not being indexes would be overwritten, then those intermediate, and finally the index pages (in practice, with a memory of at least 32 pages, the case of overwriting index pages should almost never take place).

The described invention does not have to necessarily be considered alone, but may advantageously be integtrated with other algorithms already known and comonly applied in teletext decoders. For example many decoders carry out an automatic search of the previous and following pages of the one selected. The remote control is provided with keys "+" and "-", through which it is possible to request said pages, with out having to wait. This feature may be maintained, providing in a permanent way two acquisitors for this aim. For the accomplishment of other functions connected with the present invention five acquisitors would remain available, as opposed to seven, as in the given example. This does partly reduce the efficiency of what has been proposed.

An optimal solution could consist in a compromise. The keys "+" and "-" are maintained, however only one acquisitor is permanently destined to the acquisition of the following page (next), while for the previous page it is based on the fact that it is probably already present in the memory as it has been acquired in a previous phases. On the contrary the user shall have to wait for the customary length of time. In this way the available acquisitors for the provided functions of the present invention would be six.

The characteristics of the receiver of teletext transmissions described are clear from the present description and annexed drawings.

From the description the advantages of the receiver of teletext transmissions also result in being clear. In particular they consist in the fact that functions that are normally available only to users of teletext services equipped with FLOF or TOP systems are made available also to users of teletext services not equipped with such improvements.

It is clear that the described receiver of teletext transmissions is more flexible than those known; it is also clear that numerous variants are possible by the man skilled in the art, to the receiver of teletext transmissions described as an example, without however departing from the novelty principles inherent in the invention.

## Claims

1. Receiver of teletext transmissions, under form of a plurality of pages, inserted in the television signal, comprising means for receiving and demodulating the television signal, and also decoding means (12,13) for also obtaining the associated teletext signal and selection means for selecting a chosen page from those transmitted, and memory means (14) for memorising at least one chosen teletext page, characterised in that the receiver includes additional means (16) that allow for selecting from the contents of a determined page (100) numbers of one or more other pages and memorise them, for facilitating the selection and/or the memorisation.

2. Receiver of teletext transmissions, according to claim 1, characterised in that said additional means (16) for identifying the numbers of the other pages contained in the text of said determined page (100) follow the method of considering page numbers all the groups of three consecutive figures that make up numbers comprised from 000 to 899.

3. Receiver of teletext transmissions, according to claim 2, characterised in that it comprises circuitry means for displaying a characteristic element (cursor) on the displayed page, and first and second command means (arrow key) for moving said characteristic element from one page number to another contained in the text of said displayed page and identified with the said method, said additional means (16) containing logic circuitry components for directly passing said characteristic element from a following or previous number, according to the activation of said first or second command means respectively.

4. Receiver of teletext transmissions, according to claim 3, characterised in that it comprises further command means for confirming the selection made by way of said first or second command means.

5. Receiver of teletext transmissions, according to one or more of the previous claims, characterised in that said decoding means (12,13) comprise a plurality of acquisitors and allow for the simultaneous acquisition of at least 4 teletext pages.

6. Receiver of teletext transmissions, according to one or more of the previous claims, characterised in that said memory means (14) are able to contain at least 16 teletext pages.

7. Receiver of teletext transmissions, according to one or more of the previous claims, characterised in that it is provided to acquire and memorise the general index page (100) as soon as a TV channel is selected.

8. Receiver of teletext transmissions, according to one or more of the previous claims, characterised in that it is provided to clean said page memory (14) each time the TV channel is changed.

9. Receiver of teletext transmissions, according to one or more of the previous claims, characterised in that as soon a teletext page is requested by the user, it is provided to verify whether said page is present in said page memory (14), in that said additional means (16) provide for maintaining and updating in a read and write memory (20) a table of all the pages memorised in the page memory (14).

10. Receiver of teletext transmissions, according to claim 9, characterised in that in the positive case said requested page is displayed, whilst in the negative case it is controlled as to whether it is being acquired, and, if even this eventuality is not verified, the acquisition and successive display is ordered.

11. Receiver of teletext transmissions, according to claim 10, characterised in that said additional means (16) provide to identify all the three digit numbers comprised from 000 to 899 contained in the text of the displayed page, and also provides to acquire the relative teletext pages and to memorise them in said memory (14).

12. Receiver of teletext transmissions, according to claim 11, characterised in that said additional means (16) provide to sign in the table contained in said read and write memory (20) the displayed and analysed page and with a first flag value in case that the page numbers contained in it are at least equal to a predetermined value.

13. Receiver of teletext transmissions, according to claim 12, characterised in that, when said page memory (14) is full and there are still pages to be memorised, said additional means (16) provide to over write one of the old pages contained in said memory, starting from those not signed with said first flag value.

14. Receiver of teletext transmissions, according to one or more of the previous claims, characterised in that said additional means comprise a central control unit (CPU).

15. Receiver of teletext transmissions, according to claim 14, characterised in that said central control unit (CPU) is realised with the programed logic technique and is coupled to a fixed memory (19) containing a series of operative instructions.

16. Receiver of teletext transmissions, according to claim 5, characterised in that one of said acquisitors is permanently dedicated to the updating of the page dislayed.

17. Receiver of teletext transmissions, according to claim 12, characterised in that said additional means (16) provide to sign in the table contained in said read and write memory (20) the displayed and analysed page and with a second flag value in case that the page numbers contained in it are less than said predetermined value.

18. Receiver of teletext transmissions, according to claim 17, characterised in that, when said page memory (14) is full and there are still pages to be memorised, said additional means (16) provide to over write one of the old pages contained in said memory, starting from those not signed with said second flag value, and successively overwriting those without a flag and finally those with said first flag value.

19. Receiver of teletext transmissions, according to claim 9, characterised in that said additional means (16) provide for identifying all the three digit numbers comprised from 000 to 899 contained in the text of all the pages memorised in said page memory (14) and provide to sign in the table in said read and write memory (20) the page analysed with a first flag value in the case that the page numbers contained in it are at least equal to a predetermined number.

20. Receiver of teletext transmissions, according to claim 12 or 17 or 19, characterised in that said predetermined number is 5.

21. Receiver of teletext transmissions, according to claim 11, characterised in that in the acquisition operation of each of the teletext pages corresponding to the three figure numbers comprised from 000 to 899 contained in the text of the analysed page is established a time-out, that is to say a maximum time for searching the page is established, after which the page is considered inexistent and the search of such page is abbandoned.

22. Receiver of teletext transmissions, according to claim 21, characterised in that the value of said time-out time is one minute.

23. Receiver of teletext transmissions, according to claim 5, characterised in that said acquisitors comprised in said decoder means (12,13), when not used for acquiring new teletext pages, are rotationally destined to the refreshment of the teletext pages already memorised in said multipage memory (14).

24. Receiver of teletext transmissions, according to claim 5, characterised in that one of said acquisitors comprised in said decoder means (12,13), is reserved for the acquisition of the following page to that displayed.
